# EUROPEAN PATENT SPECIFICATION

(11) **EP 4 333 653 B1**
(45) Date of publication and mention of the grant of the patent: **22.07.2026**
(21) Application number: 22725855.5
(22) Date of filing: 27.04.2022
(51) Int. Cl.: A24F 40/60, A24F 40/20, A24F 40/49, A24F 40/50, G06F 21/32

(54) **AN AEROSOL GENERATING DEVICE AND A METHOD FOR OPERATING AN AEROSOL GENERATING DEVICE**
AEROSOLERZEUGUNGSVORRICHTUNG UND VERFAHREN ZUM BETREIBEN EINER AEROSOLERZEUGUNGSVORRICHTUNG
DISPOSITIF DE GÉNÉRATION D'AÉROSOL ET PROCÉDÉ DE FONCTIONNEMENT D'UN DISPOSITIF DE GÉNÉRATION D'AÉROSOL

(30) Priority: 07.05.2021 EP 21172673
(43) Date of publication of application: 13.03.2024
(73) Proprietor: JT International SA, 1202 Geneva (CH)
(72) Inventor: BOUCHUIGUIR, Layth Sliman, 1293 Bellevue (CH)
(74) Representative: Serjeants LLP
(86) International application number: PCT/EP2022/061156
(87) International publication number: WO 2022/233666

(56) References cited:
- WO-A1-2013/012157
- WO-A1-2019/080745
- WO-A1-2019/104227
- WO-A1-2021/085880
- US-A1- 2017 099 877
- US-A1- 2018 295 890

## Description

### Technical Field

The present disclosure relates generally to an aerosol generating device, and more particularly to an aerosol generating device for heating an aerosol generating substrate to generate an aerosol for inhalation by a user. The present disclosure is particularly applicable to a portable (hand-held) aerosol generating device. Such devices heat, rather than burn, an aerosol generating substrate, e.g., tobacco or other suitable materials, by conduction, convention, and/or radiation to generate an aerosol for inhalation by a user. Embodiments of the present disclosure also relate to a method for operating an aerosol generating device.

### Technical Background

The popularity and use of reduced-risk or modified-risk devices (also known as aerosol generating devices or vapour generating devices) has grown rapidly in recent years as an alternative to the use of traditional tobacco products. Various devices and systems are available that heat or warm aerosol generating substances to generate an aerosol for inhalation by a user.

A commonly available reduced-risk or modified-risk device is the heated substrate aerosol generating device, or so-called heat-not-bum device. Devices of this type generate an aerosol or vapour by heating an aerosol generating substrate to a temperature typically in the range 150°C to 300°C. Heating the aerosol generating substrate to a temperature within this range, without burning or combusting the aerosol generating substrate, generates a vapour which typically cools and condenses to form an aerosol for inhalation by a user of the device.

Currently available aerosol generating devices can use one of a number of different approaches to provide heat to the aerosol generating substrate, including resistive heating which makes use of a resistive heating element and induction heating which makes use of an induction coil and an inductively heatable susceptor.

Whichever approach is used to heat the aerosol generating substrate, it may be desirable to prevent unauthorised use of an aerosol generating device and the present disclosure seeks to address this need and thereby improve the functionality of the device.

US patent publication US2018/295890 describes a vaporizer including a removable panel and a main body assembly, such that the removable panel is removably attached to the main body assembly. The main body assembly further includes a crucible/pan assembly, such that a material to be vaporized may be located within the crucible/pan assembly, an induction heater located adjacent to the crucible/pan assembly for induction heating of the crucible/pan assembly, a removable battery assembly located adjacent to the induction heater, an electronics assembly operatively connected to the battery and the induction heater, and an interchangeable mouthpiece assembly operatively attached to the crucible/pan assembly for allowing vapors from the material to be vaporized to be inhaled by an end user.

### Summary of the Disclosure

According to a first aspect of the present disclosure, there is provided an aerosol generating device as set out in claim 1.

The aerosol generating device is configured to heat an aerosol generating substrate, without burning the aerosol generating substrate, to volatise at least one component of the aerosol generating substrate and thereby generate a heated vapour which cools and condenses to form an aerosol for inhalation by a user of the aerosol generating device. The aerosol generating device is typically a hand-held, portable, device.

In general terms, a vapour is a substance in the gas phase at a temperature lower than its critical temperature, which means that the vapour can be condensed to a liquid by increasing its pressure without reducing the temperature, whereas an aerosol is a suspension of fine solid particles or liquid droplets, in air or another gas. It should, however, be noted that the terms 'aerosol' and 'vapour' may be used interchangeably in this specification, particularly with regard to the form of the inhalable medium that is generated for inhalation by a user.

According to a second aspect of the present disclosure, there is provided a method for operating an aerosol generating device as set out in claim 7.

Movement of the closure from the closed position to the open position is only permitted upon successful user authentication, specifically the generation of an authentication signal. Thus, the insertion of an aerosol generating substrate through the aperture, into the aerosol generating device, is permitted only in the event of a successful user authentication. Unauthorised use of the aerosol generating device is prevented in the absence of a successful user authentication because the closure cannot be moved from the closed position to the open position, thus preventing the insertion of an aerosol generating substrate through the aperture.

The closure may be a captive closure, such that it is retained by the body in both the closed and open positions. The closure may comprise a sliding cover. Such a closure may conveniently facilitate manufacture of the aerosol generating device. However, other types of closure, such as a pivotally mounted closure, are within the scope of the present disclosure.

The actuator may comprise a locking element which may be changeable (and specifically, moveable) between a locked state which may prevent movement of the closure from the closed position towards the open position and an unlocked state which may permit movement of the closure from the closed position towards the open position. The controller may be configured to change the locking element from the locked state to the unlocked state upon receipt of an authentication signal from the biometric authenticator. The locking element securely retains the closure in the closed position and permits movement of the closure from the closed position towards the open position only in the event of a successful user authentication.

The aerosol generating device may include a biasing element which may be configured to move the closure from the closed position to the open position when the locking element is in the unlocked state. The closure thus moves automatically from the closed position to the open position without user intervention in the event of a successful user authentication. The aerosol generating device is thereby automatically placed in a ready-to-use state in the event of a successful user authentication and the use of the aerosol generating device is thereby simplified.

The actuator may include an opening mechanism which may be arranged to move the closure from the closed position towards the open position. The controller may be configured to actuate the opening mechanism upon receipt of an authentication signal from the biometric authenticator. Step (ii) of the operating method may comprise actuating the opening mechanism by the controller. The closure is thus moved automatically from the closed position to the open position without user intervention in the event of a successful user authentication. The aerosol generating device is thereby automatically placed in a ready-to-use state in the event of a successful user authentication and the use of the aerosol generating device is thereby simplified.

The biometric authenticator may comprise a fingerprint reader (also commonly known as a fingerprint scanner or a fingerprint recognition unit). The fingerprint reader may be configured to recognise the fingerprint of an authorised user of the aerosol generating device. The biometric authenticator could alternatively comprise a facial recognition unit. The facial recognition unit may be configured to recognise one or more facial features of an authorised user of the aerosol generating device.

The aerosol generating device may comprise an electrically-operated heater for heating an aerosol generating substrate. The controller may be configured to permit activation of the heater following receipt of an authentication signal from the biometric authenticator. The operating method may further comprise permitting activation of the heater upon receipt of the authentical signal by the controller. By permitting activation of the heater only in the event of a successful user authentication, additional protection against unauthorised use of the device is achieved.

The controller may be configured to activate the heater upon receipt of the authentication signal from the biometric authenticator. The aerosol generating device may include a power source. The power source may be connected to the controller and may be connected to the heater. The controller may be configured to establish the supply of electrical power from the power source to the heater upon receipt of the authentication signal from the biometric authenticator. Thus, in the operating method of the second aspect, the controller may permit the supply of electrical power from the power source to the heater upon receipt of the authentication signal. With this arrangement, the heater is activated automatically by the controller, without user intervention, in the event of a successful user authentication thereby simplifying the operation of the device.

The aerosol generating device may include a heating chamber positioned inside the body in which an aerosol generating substrate is receivable.

The heater may comprise an internal heater which is inserted in the aerosol generating substrate. For example, it may comprise a heating blade or pin.

The heater may comprise an external heater, for example to heat the aerosol generating substrate through a wrapper which may circumscribe the aerosol generating substrate. The heater may be positioned around the heating chamber.

The heater may comprise a resistive heater. The resistive heater may comprise a resistive heating element, for example a resistive heating blade or a resistive heating tube.

The heater may comprise an electromagnetic field generator, e.g., an induction coil, for heating an inductively heatable susceptor. The heater may comprise both the electromagnetic field generator and the inductively heatable susceptor. The electromagnetic field generator may be arranged to generate an alternating electromagnetic field for inductively heating the inductively heatable susceptor. This arrangement provides a particularly convenient way to heat the aerosol generating substrate using induction heating.

The induction coil may comprise a Litz wire or a Litz cable. It will, however, be understood that other materials could be used. The induction coil may be substantially helical in shape and may extend around a heating chamber in which the aerosol generating substrate is positioned in use. The circular cross-section of a helical induction coil may, for example, facilitate the insertion of an aerosol generating article comprising the aerosol generating substrate and optionally one or more of said inductively heatable susceptors, into the heating chamber and ensures uniform heating of the aerosol generating substrate.

The inductively heatable susceptor may comprise one or more, but not limited, of aluminium, iron, nickel, stainless steel and alloys thereof, e.g. Nickel Chromium or Nickel Copper. With the application of an electromagnetic field in its vicinity, the susceptor may generate heat due to eddy currents and magnetic hysteresis losses resulting in a conversion of energy from electromagnetic to heat.

The induction coil may be arranged to operate in use with a fluctuating electromagnetic field having a magnetic flux density of between approximately 20mT and approximately 2.0T at the point of highest concentration.

The controller may be configured to operate at a high frequency. The power source and controller may be configured to operate at a frequency of between approximately 80 kHz and 500 kHz, possibly between approximately 150 kHz and 250 kHz, and possibly at approximately 200 kHz. The power source and controller could be configured to operate at a higher frequency, for example in the MHz range, depending on the type of inductively heatable susceptor that is used.

The aerosol generating device may include a user interface. The user interface may be configured for controlling the operation of the heater. The controller may be configured to permit activation of the heater via the user interface upon receipt of the authentication signal from the biometric authenticator. Step (ii) of the operating method may comprise manually activating the heater, via the user interface, following receipt of the authentication signal by the controller. With this arrangement, the heater is activated manually by a user in the event of a successful user authentication thereby giving the user a greater level of control over the operation of the device.

The aerosol generating substrate may comprise any type of solid or semi-solid material. Example types of aerosol generating solids include powder, granules, pellets, shreds, strands, particles, gel, strips, loose leaves, cut filler, porous material, foam material or sheets. The aerosol generating substrate may comprise plant derived material and in particular, may comprise tobacco. It may advantageously comprise reconstituted tobacco, for example including tobacco and any one or more of cellulose fibres, tobacco stalk fibres and inorganic fillers such as CaCO3.

Consequently, the aerosol generating device may be referred to as a "heated tobacco device", a "heat-not-bum tobacco device", a "device for vaporising tobacco products", and the like, with this being interpreted as a device suitable for achieving these effects. The features disclosed herein are equally applicable to devices which are designed to vaporise any aerosol generating substrate.

The aerosol generating substrate may form part of an aerosol generating article and may be circumscribed by a paper wrapper.

The aerosol generating article may be formed substantially in the shape of a stick, and may broadly resemble a cigarette, having a tubular region with an aerosol generating substrate arranged in a suitable manner. The aerosol generating article may include a filter segment, for example comprising cellulose acetate fibres, at a proximal end of the aerosol generating article. The filter segment may constitute a mouthpiece filter and may be in coaxial alignment with the aerosol generating substrate. One or more vapour collection regions, cooling regions, and other structures may also be included in some designs. For example, the aerosol generating article may include at least one tubular segment upstream of the filter segment. The tubular segment may act as a vapour cooling region. The vapour cooling region may advantageously allow the heated vapour generated by heating the aerosol generating substrate to cool and condense to form an aerosol with suitable characteristics for inhalation by a user, for example through the filter segment.

The aerosol generating substrate may comprise an aerosol-former. Examples of aerosol-formers include polyhydric alcohols and mixtures thereof such as glycerine or propylene glycol. Typically, the aerosol generating substrate may comprise an aerosol-former content of between approximately 5% and approximately 50% on a dry weight basis. In some embodiments, the aerosol generating substrate may comprise an aerosol-former content of between approximately 10% and approximately 20% on a dry weight basis, and possibly approximately 15% on a dry weight basis.

Upon heating, the aerosol generating substrate may release volatile compounds. The volatile compounds may include nicotine or flavour compounds such as tobacco flavouring.

### Brief Description of the Drawings

Figure 1 is diagrammatic perspective view of a first example of an aerosol generating device having a closure in a closed position;
Figure 2 is a diagrammatic cross-sectional view from a side of the aerosol generating device of Figure 1, shown with the closure in the closed position and with an aerosol generating article ready to be loaded into the aerosol generating device;
Figure 3 is a diagrammatic perspective view of the aerosol generating device of Figure 1, shown with the closure in an open position and with an aerosol generating article loaded into the aerosol generating device;
Figure 4 is a diagrammatic cross-sectional view from the side of the aerosol generating device of Figure 1, shown with the closure in the open position and with the aerosol generating article loaded into the aerosol generating device;
Figure 5 is a detailed cross-sectional view of a second (upper) end of the aerosol generating device of Figures 1 to 4 showing a locking element in a locked state for preventing movement of the closure from the closed position;
Figure 6 is a detailed cross-sectional view of the second (upper) end of the aerosol generating device of Figures 1 to 4 showing the locking element in an unlocked state and the closure in the open position; and
Figure 7 is a diagrammatic cross-sectional view similar to Figure 2 from a side of a second example of an aerosol generating device, shown with the closure in the closed position, and having an opening mechanism for moving the closure from the closed position towards the open position.

### Detailed Description of Embodiments

Embodiments of the present disclosure will now be described by way of example only and with reference to the accompanying drawings.

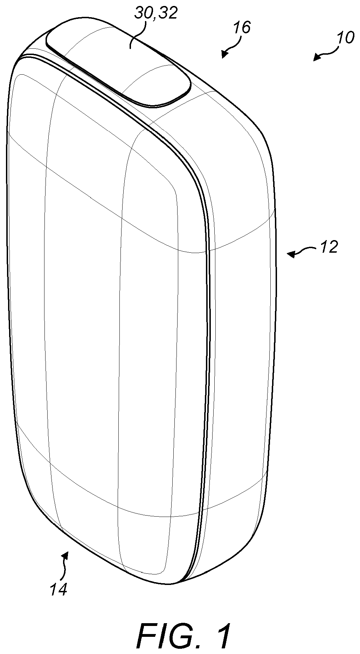

Referring initially to Figures 1 to 4, a first example of an aerosol generating device 10 comprises a body 12 housing various components of the aerosol generating device 10 and including an aperture 13 through which an aerosol generating substrate 102 is receivable into the aerosol generating device 10. The body 12 can have any shape provided that it is sized to fit the components described in the various embodiments set out herein and to be comfortably held by a user unaided, in a single hand.

A first end 14 of the aerosol generating device 10, shown towards the bottom of each of Figures 1 to 4, is described for convenience as a distal, bottom, base or lower end of the aerosol generating device 10. A second end 16 of the aerosol generating device 10, shown towards the top of each of Figures 1 to 4, is described as a proximal, top or upper end of the aerosol generating device 10. During use, the user typically orients the aerosol generating device 10 with the first end 14 downward and/or in a distal position with respect to the user's mouth and the second end 16 upward and/or in a proximal position with respect to the user's mouth.

The aerosol generating device 10 includes a heating chamber 18 defining a cavity 20 having a substantially cylindrical cross-section for receiving an aerosol generating substrate 102. The aerosol generating device 10 further comprises a power source 22, for example one or more batteries which may be rechargeable, and a controller 24. The aerosol generating device 10 may comprise a chassis on which the heating chamber 18, power source 22 and controller 24 are mounted, such that these components may form a single unit.

The heating chamber 18 is open towards the second end 16 of the aerosol generating device 10. In other words, the heating chamber 18 has an open first end 26 towards the second end 16 of the aerosol generating device 10 that is aligned with the aperture 13. The heating chamber 18 is typically held spaced apart from the main body 12 of the aerosol generating device 10 to inhibit heat transfer to the main body 12. **In** order to further increase the thermal isolation of the heating chamber 18, the heating chamber 18 may be surrounded by insulation, for example a fibrous or foam material, such as cotton wool, aerogel or gas, or in other examples vacuum insulation may be provided.

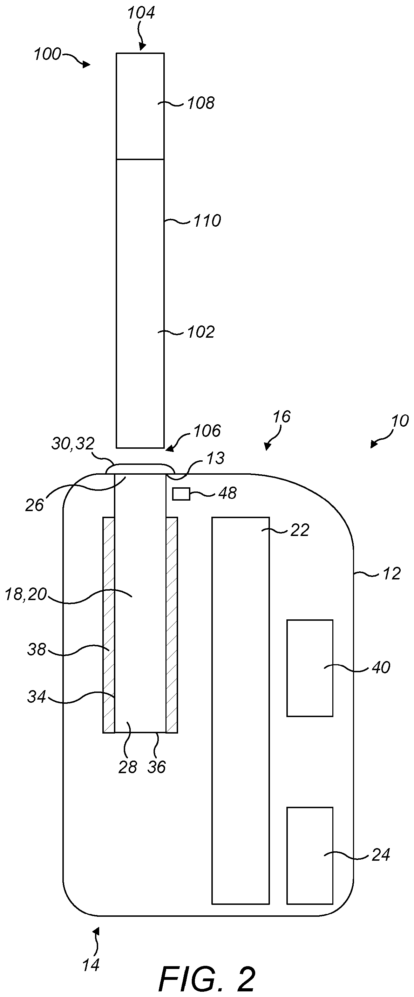

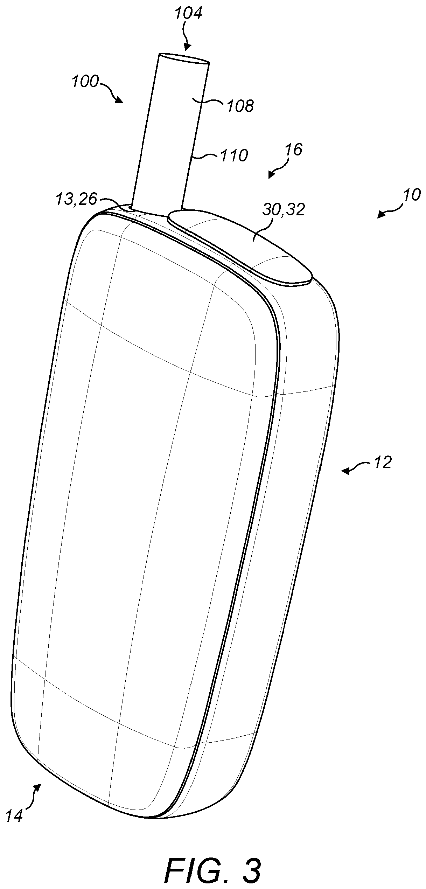

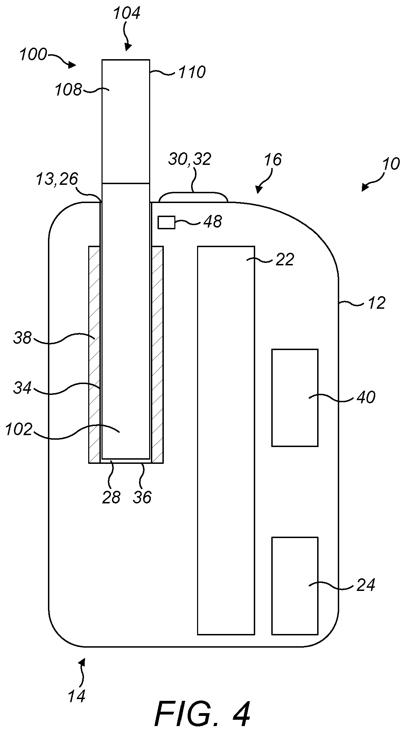

The aerosol generating device 10 includes a closure 30 movable relative to the aperture 13 between a closed position (Figures 1 and 2) in which the closure 30 at least partially (and preferably fully) covers the aperture 13 and an open position (Figures 3 and 4) in which the aperture 13 is substantially unobstructed by the closure 30. **In** the illustrated example, the closure 30 comprises a captive closure, and specifically a sliding cover 32 movable transversely between the closed position in which it covers the open first end 26 of the heating chamber 18 to prevent access to the heating chamber 18 and the open position in which it exposes the open first end 26 of the heating chamber 18 to provide access to the heating chamber 18.

The heating chamber 18, and specifically the cavity 20, is arranged to receive a correspondingly shaped generally cylindrical or rod-shaped aerosol generating article 100 as illustrated in Figures 2 to 4. Typically, the aerosol generating article 100 comprises a pre-packaged aerosol generating substrate 102. The aerosol generating article 100 is a disposable and replaceable article (also known as a "consumable") which may, for example, contain tobacco as the aerosol generating substrate 102. The aerosol generating article 100 has a proximal end 104 (or mouth end) and a distal end 106. The aerosol generating article 100 further comprises a mouthpiece segment 108 positioned downstream of the aerosol generating substrate 102. The aerosol generating substrate 102 and the mouthpiece segment 108 are arranged in coaxial alignment inside a wrapper 110 (e.g., a paper wrapper) to hold the components in position to form the rod-shaped aerosol generating article 100.

The mouthpiece segment 108 can comprise one or more of the following components (not shown in detail) arranged sequentially and in co-axial alignment in a downstream direction, in other words from the distal end 106 towards the proximal (mouth) end 104 of the aerosol generating article 100: a cooling segment, a center hole segment and a filter segment. The cooling segment typically comprises a hollow paper tube having a thickness which is greater than the thickness of the wrapper 110. The center hole segment may comprise a cured mixture containing cellulose acetate fibres and a plasticizer, and functions to increase the strength of the mouthpiece segment 108. The filter segment typically comprises cellulose acetate fibres and acts as a mouthpiece filter. As heated vapour flows from the aerosol generating substrate 102 towards the proximal (mouth) end 104 of the aerosol generating article 100, the vapour cools and condenses as it passes through the cooling segment and the center hole segment to form an aerosol with suitable characteristics for inhalation by a user through the filter segment.

In other embodiments, the heating chamber 18 can be arranged to receive the aerosol generating substrate 102 in other forms, such as loose shredded material, solid material packaged in other ways, or as an aerosol generating liquid packaged in an aerosol generating article 100.

The heating chamber 18 has a side wall 34 extending between a base 36 (located at a second end 28 of the heating chamber 18) and the open first end 26. The side wall 34 and the base 36 are connected to each another and can be integrally formed as a single piece. **In** the illustrated embodiment, the side wall 34 is tubular and, more specifically, cylindrical. However, in other embodiments the side wall 34 can have other suitable shapes, such as a tube with an elliptical or polygonal cross section. **In** yet further embodiments, the side wall 34 can be tapered.

In the illustrated embodiment, the base 36 of the heating chamber 18 is closed, e.g., sealed or air-tight. That is, the heating chamber 18 is cup-shaped. This can ensure that air drawn from the open first end 26 is prevented by the base 36 from flowing out of the second end 28 and is instead guided through the aerosol generating substrate 102. It can also ensure that a user inserts the aerosol generating article 100 into the heating chamber 18 an intended distance and no further.

The aerosol generating device 10 includes an electrically-operated heater 38 for heating the aerosol generating substrate 102 without burning the aerosol generating substrate 102. That is, the heater 38 is arranged to heat the aerosol generating substrate 102 using electrical power. For this purpose, the power source 22 is coupled to the controller 24. The controller 24 is in turn coupled to the heater 38. During operation of the aerosol generating device 10, the controller 24 controls the supply of electrical power from the power source 22 to the heater 38 to heat the aerosol generating substrate 102 to a desired temperature.

In the illustrated embodiment, the heater 38 is a resistive heater which coextends with the side wall 34 of the heating chamber 18. Other types and configurations of heater 38 can, of course, be used as discussed earlier in this specification. In the illustrated embodiment, the heater 38 is mounted on a surface of the tubular side wall 34 facing away from an interior volume of the heating chamber 18. This can help to protect the heater 38 from damage as the aerosol generating article 100, and more specifically the aerosol generating substrate 102, is inserted into, and removed from, the cavity 20 defined by the heating chamber 18.

In order to use the aerosol generating device 10, the sliding cover 32 (or other closure 30) must be moved from the closed position shown in Figures 1 and 2 to the open position shown in Figures 3 and 4. The user can then insert an aerosol generating article 100 through the aperture 13 and the open first end 26 into the heating chamber 18, so that the aerosol generating substrate 102 is received in the cavity 20 and so that the proximal end 104 of the aerosol generating article 100 is positioned at the open first end 26 of the heating chamber 18, with at least part of the mouthpiece segment 108 projecting from the open first end 26 to permit engagement by a user's lips.

Upon activation of the aerosol generating device 10, an electric current is supplied to the heater 38 causing it to heat up. The heat from the heater 38 is transferred through the side wall 34 of the heating chamber 18 to the adjacent aerosol generating substrate 102 of an aerosol generating article 100 positioned in the heating chamber 18, for example by conduction, radiation and convection. This results in heating of the aerosol generating substrate 102 and a vapour is thereby generated. The generated vapour cools and condenses to form an aerosol for inhalation by a user of the aerosol generating device 10 through the mouthpiece segment 108, and more particularly through a filter segment. The vaporisation of the aerosol generating substrate 102 is facilitated by the addition of air from the surrounding environment through the aperture 13 and the open first end 26 of the heating chamber 18, the airflow being between the wrapper 110 of the aerosol generating article 100 and the inner surface of the cylindrical side wall 34.

In order to restrict usage of the aerosol generating device 10, and in particular to ensure that it can only be used by an authorised user, the aerosol generating device 10 comprises a biometric authenticator 40 coupled to the controller 24. The biometric authenticator 40, which may comprise a fingerprint reader, verifies the identity of a user of the aerosol generating device 10 and is configured to generate an authentication signal in the event of a successful user authentication. The controller 24 only permits movement of the closure 30 (e.g., sliding cover 32) from the closed position (Figures 1 and 2) to the open position (Figures 3 and 4) upon receiving an authentication signal from the biometric authenticator 40, thus preventing an aerosol generating article 100, and more particularly an aerosol generating substrate 102, from being inserted through the aperture 13 and into the heating chamber 18 via the open first end 26 in the event of an unsuccessful user authentication.

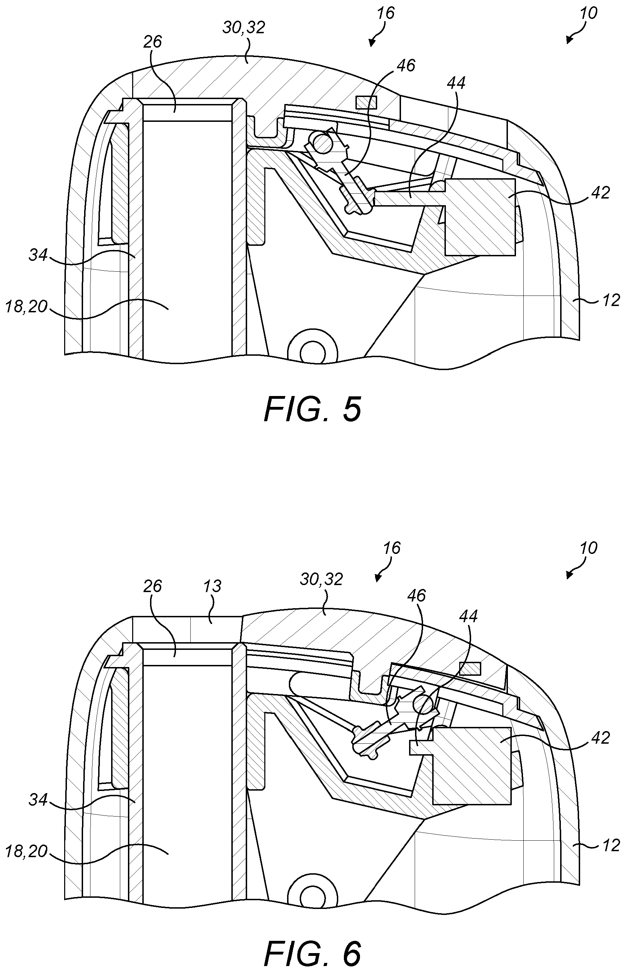

The aerosol generating device 10 comprises an actuator, shown in Figures 5 and 6 as a locking element 42, which is changeable between a locked state (Figure 5) and an unlocked state (Figure 6). When the locking element 42 is in the locked state, it prevents movement of the sliding cover 32 from the closed position towards the open position, i.e., from left to right in Figures 5 and 6. When the locking element 42 is in the unlocked state, it permits movement of the sliding cover 32 from the closed position towards the open position.

In the example illustrated in Figures 5 and 6, the locking element 42 includes a locking pin 44. The locking pin 44 can be moved (e.g., by a linear actuator or other mechanism) between an extended position shown in Figure 5 and a retracted position shown in Figure 6. When the locking pin 44 is in the extended position, it cooperates with a lever 46 pivotally mounted on a lower surface of the sliding cover 32 to prevent movement of the lever 46 and, hence, sliding movement of the sliding cover 32 from the closed position towards the open position. When the locking pin 44 is in the retracted position, it is spaced from, and does not cooperate with, the lever 46 thereby permitting movement of the lever 46 and, hence, sliding movement of the sliding cover 32 from the closed position towards the open position. The linear actuator or other mechanism controlling the movement of the locking pin 44 is configured to retract the locking pin 44, and hence change the locking element 42 from the locked state to the unlocked state, only upon receipt of an authentication signal from the controller 24 to indicate a successful user authentication.

In the example illustrated in Figures 5 and 6, the sliding cover 32 is movable from the closed position (Figure 5) to the open position (Figure 6) by a user after the locking element 42 has been changed to the unlocked state following a successful user authentication. For example, a user can engage their thumb or finger with an upper surface of the sliding cover 32 to slide it from the closed position towards the open position. The sliding cover 32 may be arranged so that the open position and the closed position are both "stable" positions, e.g., so that there is zero net force acting on the siding cover 32 when the sliding cover 32 is in the open position or the closed position.

According to an embodiment, the aerosol generating device 10 may include a biasing element 48 (Figures 2 and 4) which moves the sliding cover 32 from the closed position to the open position when the locking element 42 has been changed to the unlocked state following a successful user authentication. The biasing element 48 may comprise a spring or other resilient element which urges the sliding cover 32 from the closed position towards the open position. Thus, the biasing element 48 may be arranged so that only the open position of the sliding cover 32 is a "stable" position, e.g., so that there is zero net force acting on the sliding cover 32 when it is in the open position, and so that there is a net force acting on the sliding cover 32 when it is in the closed position to urge it from the closed position to the open position.

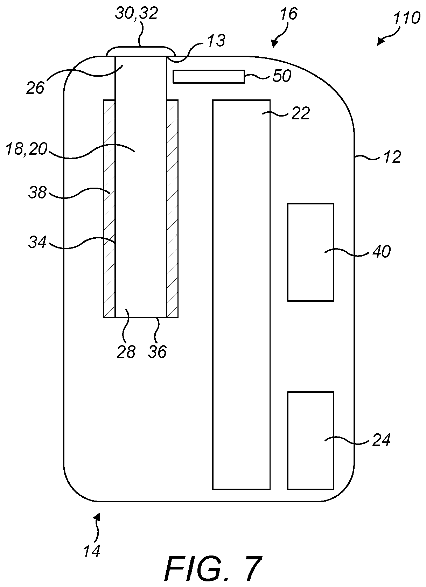

Referring now to Figure 7, there is shown a second embodiment of an aerosol generating device 110. The aerosol generating device 110 is similar to the aerosol generating device 10 illustrated in Figures 1 to 6 and corresponding components are identified using the same reference numerals.

The aerosol generating device 110 includes an actuator in the form of an opening mechanism 50 coupled to the sliding cover 32 to actively move the sliding cover 32 from the closed position towards the open position, and optionally to move the sliding cover 32 from the open position towards the closed position. The opening mechanism 50 may comprise a linear actuator (e.g., a solenoid) or other mechanism and is actuated by the controller 24, upon receipt of an authentication signal from the biometric authenticator 40, to move the sliding cover 32 from the closed position to the open position. Thus, the movement of the sliding cover 32 from the closed position to the open position is fully automatic in the event of a successful user authentication.

In some embodiments, the controller 24 can be configured to permit activation of the heater 38 only following receipt of an authentication signal from the biometric authenticator 40. Additional protection against unauthorised use of the aerosol generating device 10 is thereby provided in such embodiments, because the heater 38 can only be activated in the event of a successful user authentication.

Although exemplary embodiments have been described in the preceding paragraphs, it should be understood that various modifications may be made to those embodiments without departing from the scope of the appended claims. Thus, the breadth and scope of the claims should not be limited to the above-described exemplary embodiments.

Unless the context clearly requires otherwise, throughout the description and the claims, the words "comprise", "comprising", and the like, are to be construed in an inclusive as opposed to an exclusive or exhaustive sense; that is to say, in the sense of "including, but not limited to".

## Claims

1. An aerosol generating device (10, 110) comprising:
a body (12) having an aperture (13) through which an aerosol generating substrate (102) is receivable into the aerosol generating device (10, 110);
a closure (30) movable relative to the aperture (13) between a closed position in which the closure (30) at least partially covers the aperture (13) and an open position in which the aperture (13) is substantially unobstructed by the closure (30);
a controller (24);
a biometric authenticator (40) for verifying the identity of a user of the aerosol generating device (10, 110) and configured to generate an authentication signal; and
an actuator movable between a locked state and an unlocked state;
**characterised in that** the controller (24) is configured to cause the actuator to move from the locked state to the unlocked state to permit movement of the closure (30) from the closed position towards the open position upon receipt of an authentication signal from the biometric authenticator (40), such movement causing the closure to move automatically from the closed position to the open position without user intervention in the event of a successful user authentication, wherein a biasing element (48) or an opening mechanism (50) causes the closure to move automatically to the open position.

2. An aerosol generating device according to claim 1, wherein:
the actuator comprises a locking element (42) operable to prevent movement of the closure (30) from the closed position towards the open position in the locked state and operable to permit movement of the closure (30) from the closed position towards the open position in the unlocked state.

3. An aerosol generating device according to any preceding claim, wherein the biometric authenticator (40) comprises a fingerprint reader.

4. An aerosol generating device according to any preceding claim, wherein the aerosol generating device (10, 110) comprises:
an electrically-operated heater (38) for heating an aerosol generating substrate (102); and
the controller (24) is configured to permit activation of the electrically-operated heater (38) following receipt of an authentication signal from the biometric authenticator (40).

5. An aerosol generating device according to any preceding claim, wherein the closure (30) is a captive closure, such that the closure (30) is retained by the body (12) in both the closed and open positions,

6. An aerosol generating device according to any preceding claim, wherein the closure (30) comprises a sliding cover (32).

7. A method for operating an aerosol generating device (10, 110) comprising: a body (12) having an aperture (13) through which an aerosol generating substrate (102) is receivable into the aerosol generating device (10, 110); a closure (30) movable relative to the aperture (13) between a closed position in which the closure (30) at least partially covers the aperture (13) and an open position in which the aperture (13) is substantially unobstructed by the closure (30); and an actuator movable between a locked state and an unlocked state; the method comprising:
(i) biometrically verifying the identity of a user of the aerosol generating device (10, 110) and generating an authentication signal in response to a positive user identification; and
(ii) operating the actuator to permit movement of the closure (30) from the closed position towards the open position upon receipt of the authentication signal by a controller (24) of the aerosol generating device (10, 110), wherein operating the actuator causes the closure to move automatically from the closed position to the open position without user intervention in the event of a successful user authentication, wherein a biasing element (48) or an opening mechanism (50) causes the closure to move automatically to the open position.

8. An operating method according to claim 7, wherein the aerosol generating device (10, 110) comprises an electrically-operated heater (38) for heating an aerosol generating substrate (102), and the method further comprises permitting activation of the electrically-operated heater (38) upon receipt of the authentication signal.

9. An operating method according to claim 8, wherein the aerosol generating device (10, 110) includes a power source (22) and the method further comprises permitting the supply of electrical power from the power source (22) to the electrically-operated heater (38) upon receipt of the authentication signal.

## Patentansprüche

1. Aerosolerzeugungsvorrichtung (10, 110), umfassend:
einen Körper (12), der eine Öffnung (13) aufweist, durch die ein Aerosolerzeugungssubstrat (102) in die Aerosolerzeugungsvorrichtung (10, 110) aufnehmbar ist;
einen Verschluss (30), der relativ zu der Öffnung (13) zwischen einer geschlossenen Position, in der der Verschluss (30) die Öffnung (13) zumindest teilweise abdeckt, und einer offenen Position bewegbar ist, in der die Öffnung (13) durch den Verschluss (30) im Wesentlichen unversperrt ist;
eine Steuereinheit (24);
einen Biometrik-Authentifikator (40) zum Verifizieren der Identität eines Benutzers der Aerosolerzeugungsvorrichtung (10, 110) und ausgebildet zum Erzeugen eines Authentifizierungssignals; und
ein Betätigungselement, das zwischen einem verriegelten Zustand und einem entriegelten Zustand bewegbar ist;
**dadurch gekennzeichnet, dass** die Steuereinheit (24) ausgebildet ist, zu veranlassen, dass sich das Betätigungselement von dem verriegelten Zustand in den entriegelten Zustand bewegt, um eine Bewegung des Verschlusses (30) von der geschlossenen Position in Richtung auf die offene Position bei Erhalt eines Authentifizierungssignals von dem Biometrik-Authentifikator (40) zu ermöglichen, wobei eine solche Bewegung veranlasst, dass sich der Verschluss ohne Eingreifen des Benutzers im Fall einer erfolgreichen Benutzerauthentifizierung automatisch von der geschlossenen Position in die offene Position bewegt, wobei ein Vorspannelement (48) oder ein Öffnungsmechanismus (50) veranlasst, dass sich der Verschluss automatisch in die offene Position bewegt.

2. Aerosolerzeugungsvorrichtung nach Anspruch 1, wobei:
das Betätigungselement ein Verriegelungselement (42) umfasst, das betriebsfähig ist, um im verriegelten Zustand eine Bewegung des Verschlusses (30) von der geschlossenen Position in Richtung auf die offene Position zu verhindern, und betriebsfähig ist, um im entriegelten Zustand eine Bewegung des Verschlusses (30) von der geschlossenen Position in Richtung auf die offene Position zu ermöglichen.

3. Aerosolerzeugungsvorrichtung nach einem vorstehenden Anspruch, wobei der Biometrik-Authentifikator (40) einen Fingerabdruckleser umfasst.

4. Aerosolerzeugungsvorrichtung nach einem vorstehenden Anspruch, wobei die Aerosolerzeugungsvorrichtung (10, 110) Folgendes umfasst:
ein elektrisch betriebenes Heizelement (38) zum Erwärmen eines Aerosolerzeugungssubstrats (102); und
die Steuereinheit (24) ausgebildet ist, die Aktivierung des elektrisch betriebenen Heizelements (38) nach Erhalt eines Authentifizierungssignals vom Biometrik-Authentifikator (40) zu ermöglichen.

5. Aerosolerzeugungsvorrichtung nach einem vorstehenden Anspruch, wobei der Verschluss (30) ein gefangener Verschluss ist, so dass der Verschluss (30) durch den Körper (12) sowohl in der geschlossenen Position als auch in der offenen Position gehalten wird,

6. Aerosolerzeugungsvorrichtung nach einem vorstehenden Anspruch, wobei der Verschluss (30) eine Schiebeabdeckung (32) umfasst.

7. Verfahren zum Betreiben einer Aerosolerzeugungsvorrichtung (10, 110), umfassend: einen Körper (12), der eine Öffnung (13) aufweist, durch die ein Aerosolerzeugungssubstrat (102) in die Aerosolerzeugungsvorrichtung (10, 110) aufnehmbar ist; einen Verschluss (30), der relativ zu der Öffnung (13) zwischen einer geschlossenen Position, in der der Verschluss (30) die Öffnung (13) zumindest teilweise abdeckt, und einer offenen Position bewegbar ist, in der die Öffnung (13) durch den Verschluss (30) im Wesentlichen unversperrt ist; und ein Betätigungselement, das zwischen einem verriegelten Zustand und einem entriegelten Zustand bewegbar ist; wobei das Verfahren umfasst:
(i) biometrisches Verifizieren der Identität eines Benutzers der Aerosolerzeugungsvorrichtung (10, 110) und Erzeugen eines Authentifizierungssignals als Reaktion auf eine positive Benutzeridentifizierung; und
(ii) Betreiben des Betätigungselements, um eine Bewegung des Verschlusses (30) von der geschlossenen Position in Richtung auf die offene Position bei Erhalt des Authentifizierungssignals durch eine Steuereinheit (24) der Aerosolerzeugungsvorrichtung (10, 110) zu ermöglichen, wobei das Betreiben des Betätigungselements veranlasst, dass sich der Verschluss ohne Eingreifen des Benutzers im Fall einer erfolgreichen Benutzerauthentifizierung automatisch von der geschlossenen Position in die offene Position bewegt, wobei ein Vorspannelement (48) oder ein Öffnungsmechanismus (50) veranlasst, dass sich der Verschluss automatisch in die offene Position bewegt.

8. Verfahren zum Betreiben nach Anspruch 7, wobei die Aerosolerzeugungsvorrichtung (10, 110) ein elektrisch betriebenes Heizelement (38) zum Erwärmen eines Aerosolerzeugungssubstrats (102) umfasst und das Verfahren weiter das Ermöglichen der Aktivierung des elektrisch betriebenen Heizelements (38) bei Erhalt des Authentifizierungssignals umfasst.

9. Verfahren zum Betreiben nach Anspruch 8, wobei die Aerosolerzeugungsvorrichtung (10, 110) eine Stromquelle (22) einschließt und das Verfahren weiter das Ermöglichen der Zufuhr elektrischer Leistung von der Stromquelle (22) zu dem elektrisch betriebenen Heizelement (38) bei Erhalt des Authentifizierungssignals umfasst.

## Revendications

1. Dispositif de génération d'aérosol (10, 110) comprenant :
un corps (12) présentant une ouverture (13) à travers laquelle un substrat de génération d'aérosol (102) peut être reçu dans le dispositif de génération d'aérosol (10, 110) ;
une fermeture (30) mobile par rapport à l'ouverture (13) entre une position fermée dans laquelle la fermeture (30) couvre au moins partiellement l'ouverture (13) et une position ouverte dans laquelle l'ouverture (13) est sensiblement non obstruée par la fermeture (30) ;
une unité de commande (24) ;
un authentificateur biométrique (40) destiné à vérifier l'identité d'un utilisateur du dispositif de génération d'aérosol (10, 110) et configuré pour générer un signal d'authentification ; et
un actionneur mobile entre un état verrouillé et un état déverrouillé ;
**caractérisé en ce que** l'unité de commande (24) est configurée pour amener l'actionneur à se déplacer de l'état verrouillé à l'état déverrouillé pour permettre un déplacement de la fermeture (30) de la position fermée vers la position ouverte lors de la réception d'un signal d'authentification provenant de l'authentificateur biométrique (40), ledit déplacement amenant la fermeture à se déplacer automatiquement de la position fermée à la position ouverte sans intervention de l'utilisateur dans le cas d'une authentification réussie de l'utilisateur, dans lequel un élément de sollicitation (48) ou un mécanisme d'ouverture (50) amène la fermeture à se déplacer automatiquement vers la position ouverte.

2. Dispositif de génération d'aérosol selon la revendication 1, dans lequel :
l'actionneur comprend un élément de verrouillage (42) apte à empêcher le déplacement de la fermeture (30) de la position fermée vers la position ouverte dans l'état verrouillé et apte à permettre le déplacement de la fermeture (30) de la position fermée vers la position ouverte dans l'état déverrouillé.

3. Dispositif de génération d'aérosol selon une quelconque revendication précédente, dans lequel l'authentificateur biométrique (40) comprend un lecteur d'empreintes digitales.

4. Dispositif de génération d'aérosol selon une quelconque revendication précédente, dans lequel le dispositif de génération d'aérosol (10, 110) comprend :
un élément chauffant actionné électriquement (38) pour chauffer un substrat de génération d'aérosol (102) ; et
l'unité de commande (24) est configurée pour permettre l'activation de l'élément chauffant actionné électriquement (38) à la suite de la réception d'un signal d'authentification provenant de l'authentificateur biométrique (40).

5. Dispositif de génération d'aérosol selon une quelconque revendication précédente, dans lequel la fermeture (30) est une fermeture captive, de telle sorte que la fermeture (30) est retenue par le corps (12) à la fois dans les positions fermée et ouverte.

6. Dispositif de génération d'aérosol selon une quelconque revendication précédente, dans lequel la fermeture (30) comprend un couvercle coulissant (32).

7. Procédé de fonctionnement d'un dispositif de génération d'aérosol (10, 110) comprenant :
un corps (12) présentant une ouverture (13) à travers laquelle un substrat de génération d'aérosol (102) peut être reçu dans le dispositif de génération d'aérosol (10, 110) ;
une fermeture (30) mobile par rapport à l'ouverture (13) entre une position fermée dans laquelle la fermeture (30) couvre au moins partiellement l'ouverture (13) et une position ouverte dans laquelle l'ouverture (13) est sensiblement non obstruée par la fermeture (30) ; et
un actionneur mobile entre un état verrouillé et un état déverrouillé ; le procédé comprenant :
(i) la vérification biométrique de l'identité d'un utilisateur du dispositif de génération d'aérosol (10, 110) et la génération d'un signal d'authentification en réponse à une identification positive de l'utilisateur ; et
(ii) le fait d'actionner l'actionneur pour permettre le déplacement de la fermeture (30) de la position fermée vers la position ouverte lors de la réception du signal d'authentification par une unité de commande (24) du dispositif de génération d'aérosol (10, 110),
dans lequel le fait d'actionner l'actionneur amène la fermeture à se déplacer automatiquement de la position fermée à la position ouverte sans intervention de l'utilisateur dans le cas d'une authentification réussie de l'utilisateur, dans lequel un élément de sollicitation (48) ou un mécanisme d'ouverture (50) amène la fermeture à se déplacer automatiquement vers la position ouverte.

8. Procédé de fonctionnement selon la revendication 7, dans lequel le dispositif de génération d'aérosol (10, 110) comprend un élément chauffant actionné électriquement (38) pour chauffer un substrat de génération d'aérosol (102), et le procédé comprend en outre le fait de permettre une activation de l'élément chauffant actionné électriquement (38) lors de la réception du signal d'authentification.

9. Procédé de fonctionnement selon la revendication 8, dans lequel le dispositif de génération d'aérosol (10, 110) inclut une source d'alimentation (22) et le procédé comprend en outre le fait de permettre l'alimentation électrique depuis la source d'alimentation (22) vers l'élément chauffant actionné électriquement (38) lors de la réception du signal d'authentification.
